(19) Europäisches Patentamt
European Patent Office
Office européen des brevets

(11) EP 0 590 421 B1

(12) EUROPÄISCHE PATENTSCHRIFT

(45) Veröffentlichungstag und Bekanntmachung des Hinweises auf die Patenterteilung:
**22.01.1997 Patentblatt 1997/04**

(51) Int Cl.[6]: **C08F 220/30**, C08F 220/34, G02F 1/35

(21) Anmeldenummer: **93114893.6**

(22) Anmeldetag: **16.09.1993**

(54) **Copolymerisate mit nichtlinear optischen Eigenschaften und deren Verwendung**

Copolymers with non-linear optical properties and their use

Copolymères à propriétés optiques non linéaires et leur utilisation

(84) Benannte Vertragsstaaten:
**BE CH DE ES FR GB IT LI NL**

(30) Priorität: **26.09.1992 DE 4232394**

(43) Veröffentlichungstag der Anmeldung:
**06.04.1994 Patentblatt 1994/14**

(73) Patentinhaber: **BASF Aktiengesellschaft
67063 Ludwigshafen (DE)**

(72) Erfinder:
- **Etzbach, Karl-Heinz, Dr.
D-6710 Frankenthal (DE)**
- **Beckmann, Stefan, Dr.
D-6800 Mannheim 1 (DE)**
- **Nuyken, Oskar, Dr. Prof.
D-8000 München (DE)**
- **Strohriegl, Peter, Dr.
D-8581 Hummeltal (DE)**
- **Mueller, Harry
D-8660 Muenchberg (DE)**

(56) Entgegenhaltungen:
**EP-A- 0 312 856** **WO-A-91/03683**
**US-A- 5 155 195**

- **CHEMICAL ABSTRACTS, vol. 115, no. 2, 15. Juli 1991, Columbus, Ohio, US; abstract no. 9790h, YAMAGUCHI ET AL. 'Phase transition and the packing structure of the side mesogenic groups of liquid crystalline side-chain copolymers'**

EP 0 590 421 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft Copolymerisate mit nichtlinear optischen Eigenschaften sowie deren Verwendung in optischen Bauelementen, insbesondere in der Nachrichtentechnik.

Polymerisate mit seitenständigen nichtlinear optischen Chromophoren und deren Herstellung durch radikalisch initiierte Polymerisation von ethylenisch ungesättigten organischen Verbindungen (Methacryl- und Acrylverbindungen), die nichtlinear optische (= NLO) Chromophore als Seitengruppen tragen, sind bereits bekannt und beispielsweise beschrieben von D.R. Robello in J. Polym. Sci; Part A: Polymer Chemistry 28, 1 (1990), M. Amano, T. Kaino, Electron. Lett. 26, 981 (1990) sowie G.R. Möhlmann, Synthetic Metals, 37,207 (1990), sowie in EP-A-0337405, EP-A-0334176, EP-A-0396172, FR-A-2630744 und FR-A-2597109.

In der deutschen Patentanmeldung P 4116594.2 wurde auch bereits ein Verfahren zur Herstellung von (Meth) acrylat-Polymerisaten mit seitenständigen nichtlinear optischen Chromophoren durch polymeranaloge Umsetzung von Polymerisaten des (Meth)acrylsäurechlorids mit D-ω-Hydroxyalkyl-Chromophoren vorgeschlagen. Damit derartige Polymere NLO-aktiv werden und eine hohe Suszeptibilität 2. Ordnung aufweisen, müssen die Seitengruppen im elektrischen Feld orientiert werden (vgl. P.H. Prasad, D.J. Williams, "Introduction to Nonlinear Optical Effects in Molecules and Polymers", J. Wiley and Sons, New York 1991). Dies geschieht üblicherweise im Bereich der Glastemperatur, wo die Seitengruppen sehr beweglich sind. Die im Feld erzielte Orientierung wird dann durch Abkühlung eingefroren. Ein Nachteil dieser Polymeren besteht in der zu schnellen Relaxation der orientierten Seitengruppen. Diese Relaxation verhindert derzeit noch die Herstellung von langzeitstabilen optischen Bauelementen.

EP-A-0312856 beschreibt Copolymerisate mit nicht linear optischen Eigenschaften, die Monomere mit Farbstoffseitenketten enthalten. Als Comonomere werden C1-C6 Alkylacrylate mit gestreckter Struktur, wie Methyl-, Ethyl-, Propyl-, Butylacrylat usw. genannt, die einen negativen Einfluß auf die Glasübergangstemperatur haben. Da eine ausreichende Relaxationsstabilität nur erreicht werden kann, wenn die Arbeitstemperatur weit unterhalb der Glasübergangstemperatur liegt, haben diese Comonomere auch einen negativen Einfluß auf die Relaxationsstabilität.

Aufgabe der vorliegenden Erfindung ist es, Copolymerisate mit nichtlinear optischen Eigenschaften aufzuzeigen, durch die eine Verhinderung bzw. Verlangsamung der Relaxation nach erfolgter Orientierung erreicht wird.

Diese Aufgabe läßt sich erfindungsgemäß dadurch lösen, daß die Copolymerisate mit nichtlinear optischen Seitengruppen zusätzlich tert-Butyl-,Isobornyl- oder insbesondere Adamantyl(meth)acrylat einpolymerisiert enthalten.

Gegenstand der vorliegenden Erfindung sind Copolymerisate mit nichtlinear optischen Eigenschaften, die dadurch gekennzeichnet sind, daß sie wiederkehrende Einheiten der allgemeinen Formel (I)

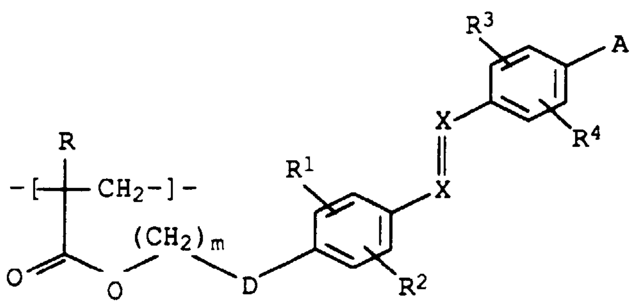

(I)

worin

D für einen Elektronendonor,
A für einen Elektronenakzeptor,
$R^1$, $R^2$, $R^3$ und $R^4$ untereinander gleich oder verschieden sein können und für H, Alkyl mit 1 bis 6 Kohlenstoffatomen, Cycloalkyl mit 5 oder 6 Kohlenstoffatomen, oder $R^3$ und $R^4$ für CN, $NO_2$, $SO_3CH_3$ oder CHO stehen, oder $R^1$ mit $R^2$ bzw. $R^3$ mit $R^4$ miteinander einen anellierten Ring bilden,
X für CH-Gruppen oder/und N-Atome,
m für eine ganze Zahl von 2 bis 11
und
R für ein Wasserstoffatom oder eine Methylgruppe stehen, sowie wiederkehrende Einheiten mindestens einer der allgemeinen Formeln (II), (III) und (IV)

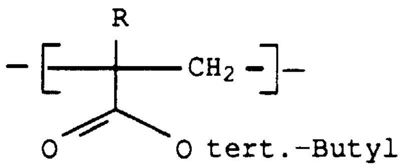

(II)

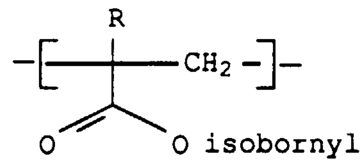

(III)

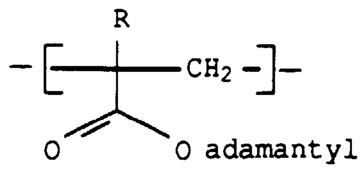

(IV)

eingebaut enthalten oder daraus aufgebaut sind.

Bevorzugt sind auch solche erfindungsgemäßen Copolymerisate, in denen in der allgemeinen Formel (I)

D für $NR^5$ oder O
-X=X- für -N=N-, -N=CH-, -CH=N- oder -CH=CH-
A für H, $NO_2$, CN, CHO, $SO_3CH_3$,

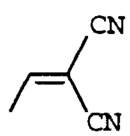 , 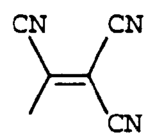 oder 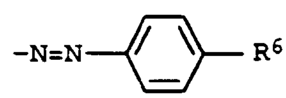 ,

$R^5$ für $C_1$-$C_6$-Alkyl oder -Alkenyl, $C_5$- bis $C_7$-Cycloalkyl, Phenyl-, Benzyl-, Tolyl- oder eine vernetzungsfähigen Gruppe und

$R^6$ für H, $NO_2$, CN, $SO_3CH_3$ oder CHO stehen, wobei diese Copolymerisate als vernetzungsfähige Gruppe $R^5$ eine Vinyl-, Allyl-, Methallyl-, Methacryl-, Acryl-, $-(CH_2)_n$-O-CO-CH=$CH_2$, $-(CH_2)_n$-O-CO-C($CH_3$)=$CH_2$ mit n = 1 bis 8, Oxiranyl- oder Thiiranylgruppe enthalten können.

Außerdem können die erfindungsgemäßen Copolymerisate neben den wiederkehrenden Einheiten der allgemeinen Formeln (I) bis (IV) mindestens eine weitere, gegebenenfalls vernetzungsfähige Gruppen enthaltende, von den der allgemeinen Formeln (I) bis (IV) verschiedene (Meth)acrylestereineit einpolymerisiert enthalten.

Vorzugsweise sind die erfindungsgemäßen Copolymerisate zu 5 bis 80 mol-% aus Einheiten der allgemeinen Formel (I) und zu 20 bis 95 mol-% aus Einheiten der allgemeinen Formeln (II), (III) oder (IV) aufgebaut.

Gegenstand der vorliegenden Erfindung ist außerdem die Verwendung der erfindungsgemäßen Copolymerisate mit nichtlinear optischen Eigenschaften in optischen Bauelementen, sowie die Verwendung dieser optischen Bauelemente in der Nachrichtentechnik.

Die erfindungsgemäßen Copolymerisate weisen nicht nur hohe Glastemperaturen auf, sondern auch die gewünschte Verlangsamung bzw. Verhinderung der Relaxation nach Orientierung im elektrischen Feld.

Zu den erfindungsgemäßen Copolymerisaten, deren Herstellung und Verwendung ist im einzelnen folgendes auszuführen.

Die erfindungsgemäßen Copolymerisate lassen sich in üblicher Weise durch radikalische Copolymerisation der Monomeren, d.h. der Monomeren mit NLO-aktiven Seitengruppen einerseits mit tert-Butyl-, Isobornyl- oder insbesondere Adamantyl(meth)acrylat andererseits in geeigneten Lösungsmitteln, wie z.B. aromatischen Kohlenwasserstoffen, wie Toluol oder Xylol, aromatischen Halogenkohlenwassorstoffen, wie z.B. Chlorbenzol, Ethern, wie z.B. Tetrahydrofuran und Dioxan, und/oder Ketonen, wie Aceton und Cyclohexanon in Gegenwart üblicher radikalliefernder Polymerisationsinitiatoren, wie z.B. Azodiisobutyronitril oder Benzoylperoxid bei erhöhten Temperaturen, beispielsweise bei 30 bis 130°C, vorzugsweise bei 40 bis 70°C, möglichst unter Wasser- und Luftausschluß herstellen und durch Ausfällen

bzw. Umfällen der erhaltenen Copolymerisatlösungen, beispielsweise in Methanol, bzw. in Chloroform/Methanol reinigen.

Als Monomere mit NLO-aktiven Seitengruppen kommen insbesondere solche der allgemeinen Formel

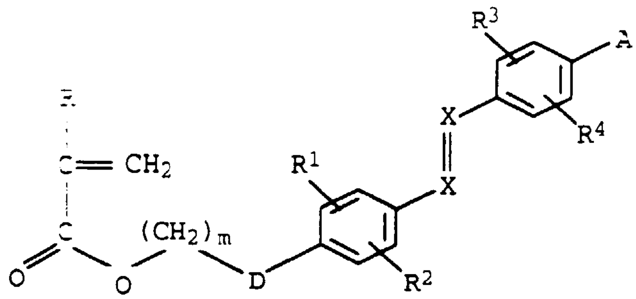

worin D, A, $R^1$ bis $R^4$, X, m und R die oben angegebene Bedeutung aufweisen, in Frage, d.h. Ester der Acryl- und insbesondere Methacrylsäure mit NLO-aktiven Gruppen der oben angegebenen Art, wobei die Elektronendonorgruppe D für ein Sauerstoffatom oder eine zweiwertige Gruppe $NR^5$, m für eine ganze Zahl von 2 bis 11, vorzugsweise 2 bis 8, beispielsweise 2, 4 oder 6, wobei $R^5$ für einen Alkylrest mit 1 bis 6 Kohlenstoffatomen, beispielsweise Methyl, Ethyl, Butyl, Hexyl, einen $C_2$-$C_6$-Alkenyl, z.B. Allyl, Hexenyl, für einen Cycloalkylrest mit 5 bis 7 Kohlenstoffatomen, wie z.B. Cyclohexyl, Phenyl, Benzyl, Tolyl oder eine vernetzungsfähige Gruppe, wie z.B. eine Vinyl-, Allyl-, Methallyl-, Acryl-, Methacryl-, $-(CH_2)_n-O-CO-CH=CH_2$, $-(CH_2)_n-O-CO-C(CH_3)=CH_2$ mit n = 1 bis 8, Oxiranyl- oder Thiiranylgruppe, beispielsweise

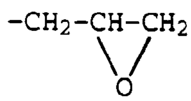 oder 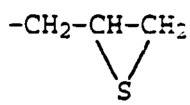

sowie Zimtsäure-, Styrol-, Maleinimid- oder Cyclopropengruppen stehen;
der Elektronenakzeptor A in der allgemeinen Formel (I) kann für Wasserstoff, $NO_2$, CN, CHO, $SO_3CH_3$ oder eine der Gruppierungen

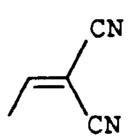 , 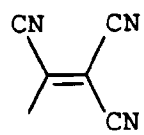 oder 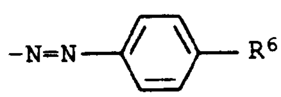

mit $R^6$ = H, $NO_2$, CN, $SO_3CH_3$ oder CHO stehen.

$R^1$, $R^2$, $R^3$ und $R^4$ in der allgemeinen Formel (I) können für Wasserstoff, Alkylgruppen mit 1 bis 6 Kohlenstoffatomen, beispielsweise Methyl, Ethyl, Isopropyl, n-Butyl, Isobutyl, Hexyl, Cycloalkyl mit 5 oder 6 Kohlenstoffatomen, wie z.B. Cyclohexyl, stehen oder $R^1$ kann mit $R^2$ bzw. $R^3$ mit $R^4$ miteinander einen anellierten Ring bilden, z.B. Naphthyl.

Beispiele für derartige Monomere mit NLO-aktiven Gruppen sind:

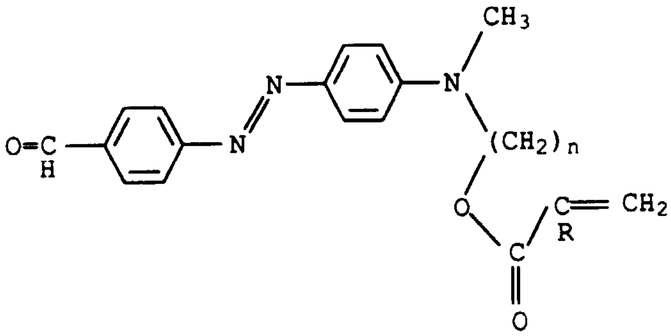

n=6 ;R=$CH_3$

n=6 ; R=$CH_3$

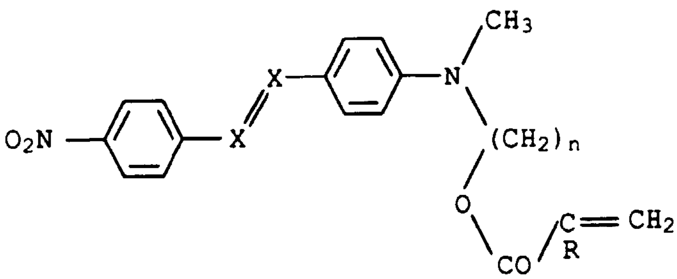

X = N, CH; n = 2, 3, 4, 6; R=$CH_3$

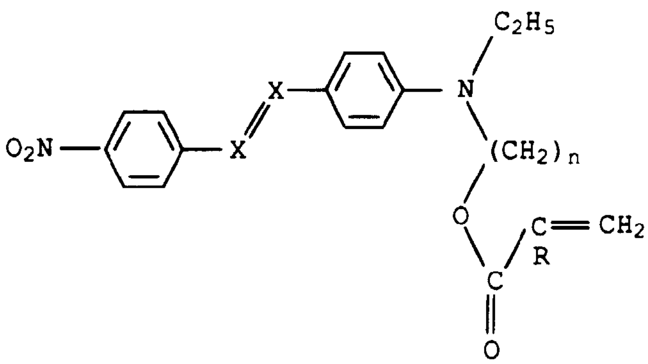

X = N, CH; n = 3, 6, 8, 11; R=$CH_3$

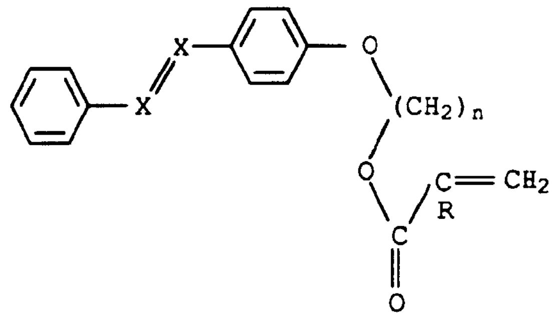

X = N, CH; n = 3, 6, 8, 11;     R=$CH_3$

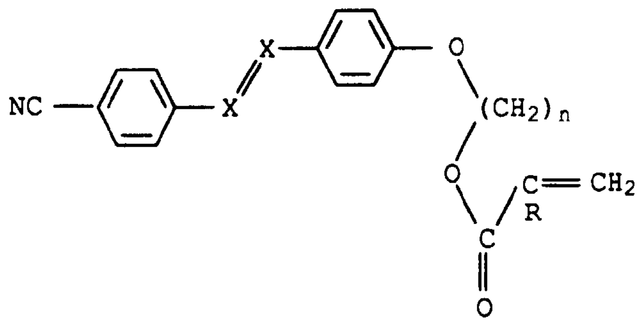

X = N, CH; n = 3, 6, 8, 11;     R=$CH_3$

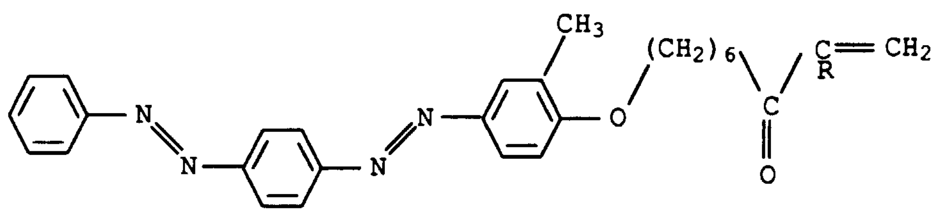

R=$CH_3$

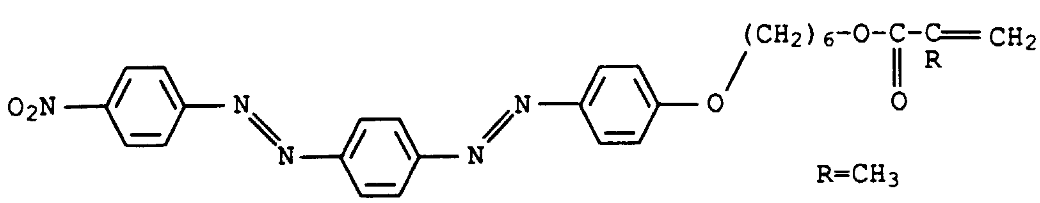

R=$CH_3$

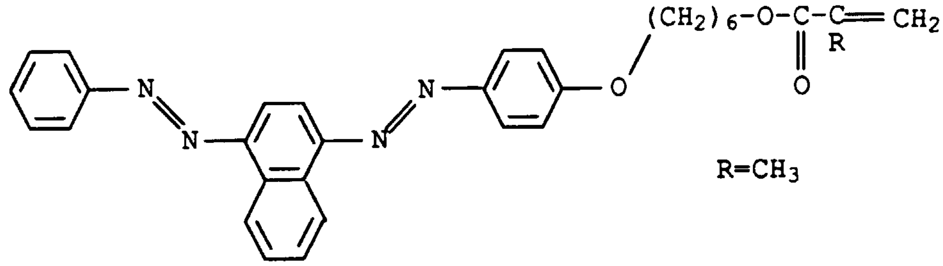

R=$CH_3$

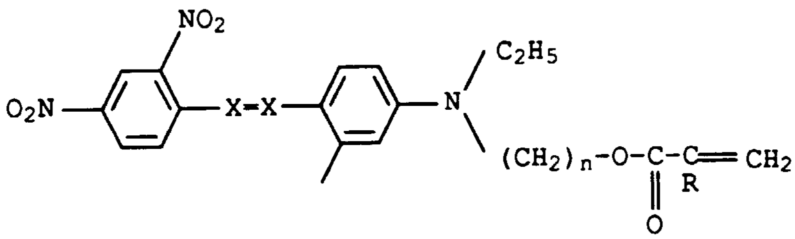

n = 2, 3, 4, 5 oder 6; X = N, CH; R=$CH_3$

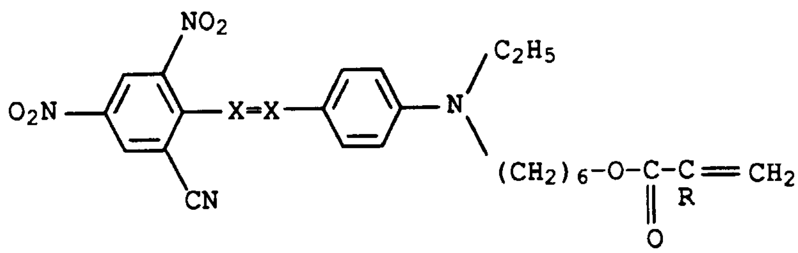

X = N, CH; n = 2, 3, 4, 6; R=$CH_3$

Die erfindungsgemäßen Copolymerisate mit nichtlinear optischen Eigenschaften enthalten neben den wiederkehrenden Einheiten der allgemeinen Formel (I) wiederkehrende Einheiten der allgemeinen Formeln (II), (III) oder (IV), vorzugsweise tert.-Butyl-, Isobornyl- oder Adamantylmethacrylat einpolymerisiert, wobei sie 5 bis 80, insbesondere 10 bis 70 mol-% Einheiten der allgemeinen Formel (I) und 95 bis 20, insbesondere 90 bis 30 mol-% Einheiten der Formel (II), (III) oder (IV), insbesondere Adamantylmethacrylat einpolymerisiert enthalten.

Beispiele für derartige erfindungsgemäße Copolymerisate sind Copolymerisate aus 4-[(6-Methacryloxyhexyl)methylamino]-4'-nitroazobenzol (=AZOC6MA) oder 4-[(2-Methacryloxyethyl)methylamino]-4'-nitroazobenzol (=AZOC2MA) und Adamantylmethacrylat (= AdMA).

Herstellung von Adamantylmethacrylat (AdMA)

Eine Lösung von 36,56 g (240 mmol) Adamantanol (z.B. der Fa. Fluka), 36,6 g (360 mmol) Triethylamin und 200 mg Hydrochinon in 930 g Methylenchlorid wurde in einer Stickstoff-Atmosphäre auf 0°C abgekühlt.

Dazu wurden 37,40 g (360 mmol) frisch destilliertes Methacrylsäurechlorid in 93 g Methylenchlorid zugetropft und 2 Stunden bei 0°C gerührt. Anschließend wurde die Lösung noch 24 Stunden bei Raumtemperatur gerührt.

Die Reaktionslösung wurde dreimal mit gesättigter wäßriger $NaHCO_3$-Lösung und einmal mit Wasser extrahiert, das Lösungsmittel Methylenchlorid im Vakuum abgezogen und der Rückstand im Hochvakuum getrocknet. Es resultierten 60 g Rohprodukt.

Dieses wurde im Hochvakuum unter Zusatz eines Stabilisators destilliert, wobei 40 g reines Produkt resultierten.

Beispiel 1

Poly((adamantyl methacrylat)-co-{4-[(6-methacryloxyhexyl)methylamino]-4'-nitroazobenzol}) (Molverhältnis 90:10)

1,98 g (9 mmol) Adamantylmethacrylat, 0,42 g (1 mmol) 4-[(6-Methacryloxyhexyl)methylamino]-4'-nitroazobenzol , 22 g Chlorbenzol und 16,4 mg (0,1 mmol) Azodiisobutyronitril (=AIBN) wurden in ein Schlenkrohr gefüllt. Die Lösung wurde sorgfältig entgast und dann bei 60°C für 48 Stunden polymerisiert. Zur Aufarbeitung wurde das Produkt in Methanol ausgefällt und dreimal aus Chloroform in Methanol umgefällt.

Ausbeute: 1,65 g (69 %) rotes Polymer.

GPC (= Gelpermeationschromatographie) (PMMA Kalibrierung): $\overline{M}_w$: 136 400; $\overline{M}_n$: 66 000; $\overline{M}_w/\overline{M}_n$ = 2,1

Beispiel 2

Poly((adamantyl methacrylat)-co-{4-[(6-methacryloxyhexyl)methylamino]-4'-nitroazobenzol}) (Molverhältnis 60:40)

1,32 g (6 mmol) Adamantylmethacrylat, 1,70 g (4 mmol) 4-[(6-Methacryloxyhexyl)methylamino]-4'-nitroazobenzol, 22 g Chlorbenzol und 24,6 mg (0,15 mmol) AIBN wurden in ein Schlenkrohr gefüllt. Die Lösung wurde sorgfältig entgast und dann bei 60°C für 48 Stunden polymerisiert. Zur Aufarbeitung wurde das Produkt in Methanol ausgefällt und dreimal aus Chloroform in Methanol umgefällt.

Ausbeute: 1,24 g (41 %) rotes Polymer.

GPC (PMMA Kalibrierung):$\overline{M}_w$: 108 800; $\overline{M}_n$: 42 100; $\overline{M}_w/\overline{M}_n$ = 2,58

Die Copolymeren im Molverhältnis 80:20 und 50:50 wurden in analoger Weise hergestellt.

Charakterisierung der Polymeren (90/10)-(50/50)

IR (Film): 2911, 2853, 1722, 1601, 1587, 1516, 1379, 1337, 1310, 1155, 1138, 1103, 1053, 858, 756 $cm^{-1}$

$^1H$ NMR ($CDCl_3$): δ= 0,5 - 2,6 (m,br, aliph.-CH), 3,05 (br, N-$CH_3$), 3,4 (br, -$NCH_2$-), 3,95 (br, -$OCH_2$-), 6,6-6,8, 7,7-8,1, 8,1-8,4 (arom. -CH) ppm

Ein Überblick über die Polymerisationsansätze und die daraus erhaltenen Copolymerzusammensetzungen und deren Eigenschaften ist in Tabelle 1 gegeben.

Tabelle 1

| Polymerisationsansatz: Monomerverhältnis [MOl%] | | Polymerzusammensetzung [Mol%][a] | | Ausbeute (%) | Glastemperatur (°C)[b] |
|---|---|---|---|---|---|
| AdMA | AZOC6MA | PAdMA | PAZOC6MA | | |
| 90 | 10 | 92 | 8 | 68 | 211 |
| 80 | 20 | 83 | 17 | 57 | 177 |
| 60 | 40 | 66 | 34 | 41 | 118 |
| 50 | 50 | 57 | 43 | 47 | 105 |

a) Bestimmt durch $^1H$-NMR Spektroskopie

b) Bestimmt durch DSC (= Differential-Scanning-Calorimetry; unter Verwendung eines Perkin Elmer DSC 7, Heizrate: 10 K/min)

Beispiel 3

Poly((adamantylmethacrylat)-co-{4-[(2-methacryloxyethyl)ethylamino]-4'-nitro-azobenzol}) (Molverhältnis 60/40)

1,32 g (6 mmol) Adamantylmethacrylat (AdMA), 1,53 g (4 mmol) 4-{(2-methacryloxyethyl)ethylamino}-4'-nitro-azobenzol (AZOC2MA), 33 g Chlorbenzol und 16,4 mg (0,1 mmol) AIBN wurden in ein Schlenkrohr gefüllt. Die Lösung

wurde sorgfältig entgast und dann bei 60°C für 48 h polymerisiert. Zur Aufarbeitung wurde das Produkt in Methanol ausgefällt und dreimal aus Chloroform in Methanol umgefällt.

Ausbeute: 0,64 g (22,5 %)

Charakterisierung dieses Polymeren:

IR (Film): 2913, 2855, 1724, 1717, 1601, 1590, 1520, 1393, 1389, 1339, 1242, 1155, 1134, 1105, 1053, 853, 756 $cm^{-1}$

$^1H$ - NMR ($CDCl_3$) : $\delta$= 0,5 - 2,3 (m, br, aliph. - CH), 3,45 (br, - N - $\underline{CH_2}$ - $CH_3$), 3,60 (br, - N - $\underline{CH_2}$ - $CH_2$), 4,10 (br, - O - $\underline{CH_2}$), 6,6 - 6,9, 7,65 - 7,95, 8,1 - 8,4 (aromat. -CH) ppm

GPC (PMMA-Kalibrierung): $\overline{M}_w$: 180 000; $\overline{M}_n$: 87 800; $\overline{M}_w/\overline{M}_n$: 2,05

Entsprechend wurden aus AdMA und AZOC2MA in den Molverhältnissen 70/30, 80/20 und 90/10 Copolymerisate hergestellt. Die Ergebnisse sind der Tabelle 2 zu entnehmen.

Tabelle 2

| Polymerisationsansatz Monomerverhältnis | | Polymerzusammensetzung a) | | Ausbeute | Glastemperatur b) |
|---|---|---|---|---|---|
| (MOL %) | | (MOL %) | | (%) | (°C) |
| AdMA | AZOC2MA | AdMA | AZOC2MA | | |
| 90 | 10 | 92 | 8 | 65 | 212 |
| 80 | 20 | 81 | 19 | 51 | 199 |
| 70 | 30 | 76 | 24 | 32 | 186 |
| 60 | 40 | 66 | 34 | 23 | 170 |

a) Bestimmt durch NMR-Spektroskopie
b) Bestimmt durch Differential-Scanning-Calorimetry (DSC), Heizrate: 10 K/min

**Patentansprüche**

**1.** Copolymerisate mit nichtlinear optischen Eigenschaften, dadurch gekennzeichnet, daß sie wiederkehrende Einheiten der allgemeinen Formel (I)

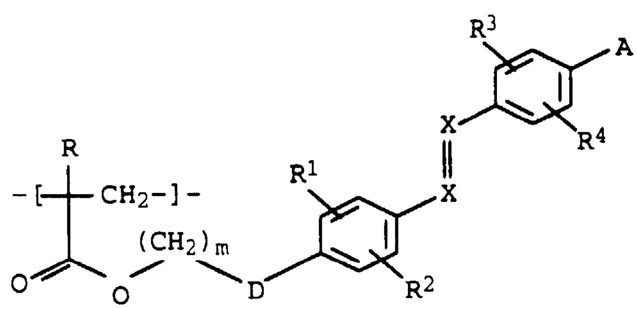

(I)

worin

D für einen Elektronendonor,
A für einen Elektronenakzeptor,
$R^1$, $R^2$, $R^3$ und $R^4$ untereinander gleich oder verschieden sein können und für H, Alkyl mit 1 bis 6 Kohlenstoffatomen, Cycloalkyl mit 5 oder 6 Kohlenstoffatomen, oder $R^3$ und $R^4$ für CN, $NO_2$, $SO_3CH_3$ oder CHO stehen, oder $R^1$ mit $R^2$ bzw. $R^3$ mit $R^4$ miteinander einen anellierten Ring bilden,
X für CH-Gruppen oder/und N-Atome,
m für eine ganze Zahl von 2 bis 11
und

R für ein Wasserstoffatom oder eine Methylgruppe stehen, sowie wiederkehrende Einheiten mindestens einer der allgemeinen Formeln (II), (III) und (IV)

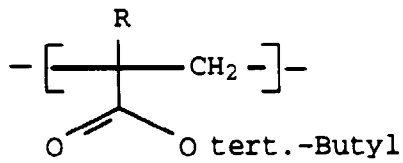

(II)

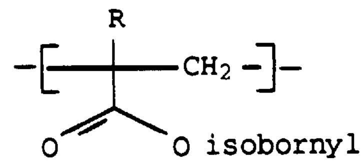

(III)

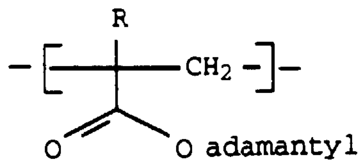

(IV)

eingebaut enthalten oder daraus aufgebaut sind.

**2.** Copolymerisate nach Anspruch 1, dadurch gekennzeichnet, daß in der allgemeinen Formel (I)

D für $NR^5$ oder O
-X=X- für -N=N-, -N=CH-, -CH=N- oder -CH=CH-
A für H, $NO_2$, CN, CHO, $SO_3CH_3$,

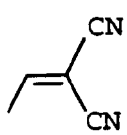 , 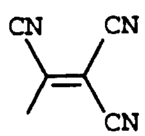 oder 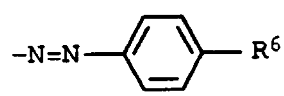 ,

$R^5$ für $C_1$-$C_6$-Alkyl oder -Alkenyl, $C_5$- bis $C_7$-Cycloalkyl, Phenyl-, Benzyl-, Tolyl- oder eine vernetzungsfähigen Gruppe und $R^6$ für H, $NO_2$, CN, $SO_3CH_3$ oder CHO stehen.

**3.** Copolymerisate nach Anspruch 2, dadurch gekennzeichnet, daß sie als vernetzungsfahige Gruppe $R^5$ eine Vinyl-, Allyl-, Methallyl-, Methacryl-, Acryl-, Oxiranyl- oder Thiiranylgruppe enthalten.

**4.** Copolymerisate nach einem der vorhergehenden Ansprüche, dadurch gekennzeichnet, daß sie neben den wiederkehrenden Einheiten der allgemeinen Formeln (I) bis (IV) mindestens eine weitere, gegebenenfalls vernetzungsfahige Gruppen enthaltende, von den der allgemeinen Formeln (I) bis (IV) verschiedene (Meth)acrylestereinheit einpolymerisiert enthalten.

**5.** Copolymerisate nach einem der Ansprüche 1 bis 4, dadurch gekennzeichnet, daß sie zu 5 bis 80 mol-% aus Einheiten der allgemeinen Formel (I) und zu 20 bis 95 mol-% aus Einheiten der allgemeinen Formeln (II), (III) oder (IV) aufgebaut sind.

**6.** Verwendung der Copolymerisate mit nichtlinear optischen Eigenschaften nach einem der vorhergehenden Ansprüche in optischen Bauelementen.

**7.** Verwendung der optischen Bauelemente nach Anspruch 6 in der Nachrichtentechnik.

**Claims**

1. A copolymer with non-linear optical properties, which contains or is composed of repeating units of the formula (I)

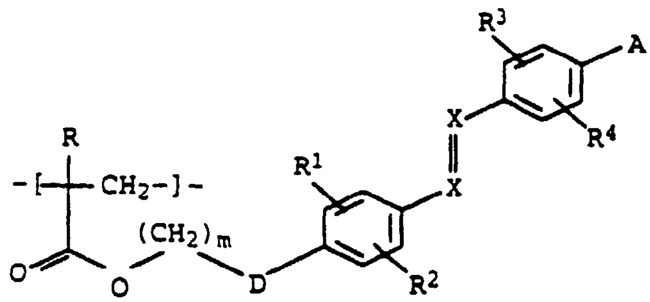

(I)

where

D is an electron donor,
A is an electron acceptor,
$R^1$, $R^2$, $R^3$ and $R^4$ can be the same as or different from one another, and are each H, alkyl of 1-6 carbons, cycloalkyl of 5 or 6 carbons, or $R^3$ and $R^4$ are each CN, $NO_2$, $SO_3CH_3$ or CHO, or $R^1$ forms with $R^2$, or $R^3$ forms with $R^4$, a fused-on ring,
X is CH and/or N,
m is an integer from 2 to 11, and
R is hydrogen or methyl,

and repeating units of at least one of the formulae (II), (III) and (IV)

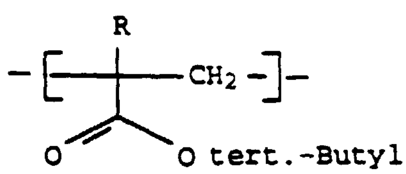

(II)

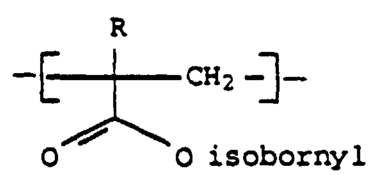

(III)

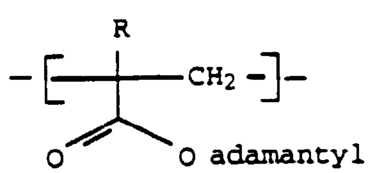

(IV)

2. A copolymer as claimed in claim 1, wherein in formula (I)

D is $NR^5$ or O
-X=X- is -N=N-, -N=CH-, -CH=N- or -CH=CH-
A is H, $NO_2$, CN, CHO, $SO_3CH_3$,

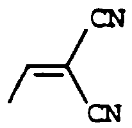 , 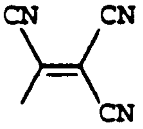 or 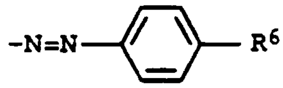 ,

$R^5$ is $C_1$-$C_6$-alkyl or -alkenyl, $C_5$-$C_7$-cycloalkyl, phenyl, benzyl, tolyl or a crosslinkable group and $R^6$ is H, $NO_2$, CN, $SO_3CH_3$ or CHO.

**3.** A copolymer as claimed in claim 2, wherein the crosslinkable group $R^5$ is vinyl, allyl, methallyl, methacryl, acryl, oxiranyl or thiiranyl.

**4.** A copolymer as claimed in any of the preceding claims, which, besides the repeating units of the formulae (I) to (IV), contains at least one other (meth)acrylate unit which is different from the formulae (I) to (IV) and may contain crosslinkable groups.

**5.** A copolymer as claimed in any of claims 1 to 4, which is composed of 5-80 mol% of units of the formula (I) and of 20-95 mol% of units of the formulae (II), (III) or (IV).

**6.** The use of a copolymer with non-linear optical properties as claimed in any one of the preceding claims in optical components.

**7.** The use of the optical components set forth in claim 6 in communications technology.

**Revendications**

**1.** Copolymères à propriétés optiques non-linéaires, caractérisés en ce qu'ils sont construits à partir, ou qu'ils contiennent, des motifs répétitifs de formule générale (I)

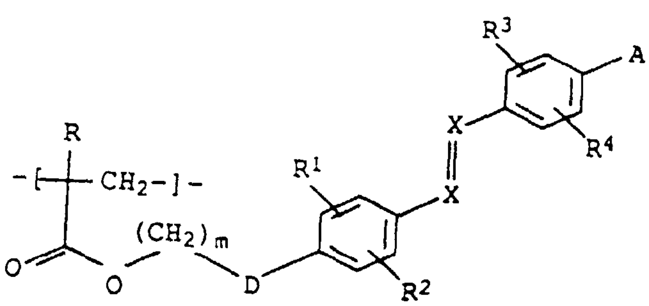

(I

dans laquelle

D représente un électrodonneur
A représente un électroaccepteur
$R^1$, $R^2$, $R^3$ et $R^4$ peuvent être différents les uns des autres ou identiques et représentent des atomes d'hydrogène, des groupements alkyle avec 1 à 6 atomes de carbone, des groupements cycloalkyles avec 5 à 6 atomes de carbone, ou bien $R^3$ et $R^4$ représentent CN, $NO_2$, $SO_3$ $CH_3$ ou CHO, ou bien $R^1$ et $R^2$, respectivement $R^3$ et $R^4$, forment ensemble un cycle en anneau,
X représentent des groupements CH ou/et des atomes d'azote,
m représente un nombre entier de 2 à 11
et
R représente un atome d'hydrogène ou un groupement méthyle, ainsi que des motifs répétitifs d'au moins une des formules générales (II), (III) et (IV)

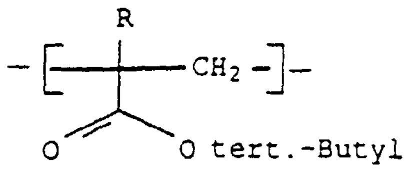

(II)

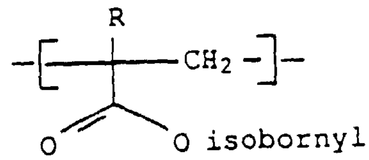

(III)

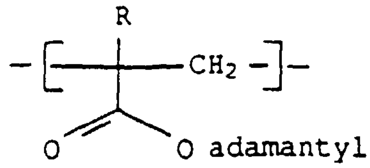

(IV)

**2.** Copolymères selon la revendication 1, caractérisés en ce que, dans la formule générale (I),

D représente $NR^5$ ou O
-X=X- représente -N=N-, -N=CH-, -CH=N- ou -CH=CH-
A représente H, $NO_2$, CN, CHO, $SO_3CH_3$

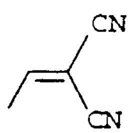 , 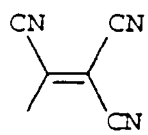 ou 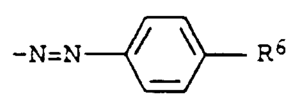

$R^5$ représente un groupement alkyle ou alcényle en $C_1$-$C_6$, un groupement cycloalkyle en $C_5$-$C_7$, un groupement phényle, benzyle, tolyle ou un groupement réticulable et $R^6$ représente H, $NO_2$, CN, $SO_3CH_3$ ou CHO.

**3.** Copolymères selon la revendication 2, caractérisés en ce qu'ils contiennent un groupement vinyle, allyle, méthallyle, méthacryle, acryle, oxiranyle ou thiiranyle, en tant que groupement réticulable $R^5$.

**4.** Copolymères selon l'une des revendications précédentes, caractérisés en ce qu'ils contiennent en liaison polymère, à côté des motifs répétitifs de formules générales (I) à (IV), au moins un autre motif ester (méth)acrylique différent de ceux de formules générales (I) à (IV), contenant éventuellement des groupements réticulables.

**5.** Copolymères selon l'une des revendications 1 à 4, caractérisés en ce qu'ils sont construits à partir de 5 à 80% en moles de motifs de formule générale (I) et de 20 à 95% en moles de motifs de formules générales (II), (III) ou (IV).

**6.** Utilisation des copolymères à propriétés optiques non linéaires, selon l'une des revendications précédentes, dans des éléments de construction optiques.

**7.** Utilisation des éléments de construction optiques selon la revendication 6 dans la technique de communications.